# EUROPEAN PATENT SPECIFICATION

(11) **EP 1 345 390 B1**
(45) Date of publication and mention of the grant of the patent: **21.12.2005**
(21) Application number: 02251790.8
(22) Date of filing: 13.03.2002
(51) Int. Cl.: H04M 1/02

(54) **Flip-cover sensor for keypad**
Klappdeckelsensor für Tastatur
Capteur pour un couvercle basculant pour clavier

(43) Date of publication of application: 17.09.2003
(73) Proprietor: Agere Systems Limited, Ascot, Berkshire SL5 8AD (GB)
(72) Inventor: Bennetts, David James, Battle, East Sussex TN33 9HL (GB); Verney, Richard, Woking, Surrey GU21 2ES (GB); Buckley, Robert Anthony, London W13 0JA (GB)
(74) Representative: Williams, David John

(56) References cited:
- EP-A- 0 961 459
- US-A- 5 615 259
- US-A- 5 848 152
- US-A1- 2002 022 496
- US-B1- 6 314 183

## Description

### Field of the Invention

The present invention is directed to keypad apparatus provided with a keypad housing and a flip cover. The invention is particularly, but not exclusively, concerned with the implementation of a flip-cover on a mobile telephone or PDA handset.

### Background to the Invention

Whilst there is a general desire to minimise the size of mobile phone handsets, there is a physical restriction in reducing the size in so far as there is a need for the ear piece to be positioned proximate the users ear at the same time as the mouth piece is positioned proximate the users mouth. This theoretically dictates that the length of the phone must be a certain minimum size.

It has been recognised that this size of the phone is only critical when the phone is in use. Based on this, it has been proposed for handsets to be provided with a flip-cover', These flip covers, when the phone are not in use, fold or slide back onto the phone handset, and therefore do not increase the overall size of the phone. When a call is to be made or taken, the cover is opened such that the length of the phone becomes longer and mouthpiece for the user is more practically positioned.

It is known in mobile handset designs of the type having a 'flip' cover that a means may be provided such that the state of the cover, either open or closed, is detected. An example of such arrangement can be found in US Patent No. 5,615,259. This detection of the cover state may be used for answering a call (on opening the cover) and terminating a call (on closing the cover).

In the prior art, it is known to provide the keypad housing with a sensor switch, which is typically a micro-switch recessed within the surface of the keypad housing, which engages with a switch activator on the cover. The switch activator is usually a small protrusion that extends into the recess on the handset surface when the cover is closed, thereby engaging, or activating, the switch. In the prior art, this switch provides an input signal to a general-purpose input/output (GPIO) pin of a micro controller within the mobile handset. Thus the micro-controller within the mobile handset receives a dedicated signal indicating whether the cover is open or closed.

One disadvantage with this prior art technique is that the provision of extra pins on the micro controller IC package increases the cost of the IC. Therefore the provision of a dedicated GPIO input to the micro controller for the purpose of detecting the status of the flip cover increases the cost of the micro-controller IC. Alternatively, using a spare GPIO pin for this purpose prevents it being used for another purpose.

In the prior art it has also been suggested to use the switch matrix associated with the keypad of the handset to detect the state of the cover. It has been proposed that a switch of the matrix could receive the signal which in the alternative prior art would be provided to the GPIO input of the microcontroller. In such a proposal, when the particular switch of the switch matrix is not pressed, a signal is sent to the keypad controller to indicate that the flip cover is open. The disadvantage with this proposal is that an entire row of the keypad switch matrix is inoperable whilst the flip cover is open, as one of the switches in that row of the matrix is constantly activated. Hence that row is not usable. As such the proposal is, in practice, not useful, since it is unlikely, in a practical scenario, that it would be possible for an entire row of the keypad matrix to be unused, as this would not leave enough keys for normal operation of the phone.

It is an aim of the present invention to provide an improved arrangement for detecting the status of the flip cover, and overcome the above-stated problems associated with the prior art.

### Summary of the Invention

According to the present invention there is provided a keypad apparatus comprising a keypad having a plurality of keys and a cover moveable between an open and a closed position, the moveable cover including engaging means for cooperating with a switch of a keypad matrix associated with the keypad, the status of the switch indicating the position of the cover, wherein with the cover in the closed position the status of the switch corresponds to a keypad key depression.

With the cover in the closed position, at least one of the plurality of keys is preferably covered. With the cover in the open position, the at least one of the plurality of keys is preferably uncovered. With the cover in the open position the status of the switch preferably corresponds to a keypad key being unpressed.

The engaging means may comprise a switch actuator. The switch actuator may be a protrusion on the surface of the cover, which engages the switch when the cover is in the closed position. The switch may be recessed in a housing of the keypad.

According to the present invention there is also provided a method for determining the status of a keypad apparatus comprising a keypad and a cover moveable between an open and a closed position, the moveable cover including engaging means for cooperating with a switch of a keypad matrix associated with the keypad, the method comprising determining the position of the cover in dependence on the status of the switch, wherein with the cover in the closed position the status of the switch corresponds to a keypad key depression,

The method preferably comprises covering at least one of the plurality of keys with the cover in the closed position. The method preferably comprises uncovering the at least one of the plurality of keys with the cover in the open position. With the cover in the open position the status of the switch preferably correspond to a keypad key being unpressed.

The engaging means may be a protrusion on the surface of the cover, the method comprising the step of the protrusion engaging the switch when the cover is in the closed position.

### Brief Description of the Drawings

Figure 1 illustrates a keypad apparatus in which the present invention may be advantageously utilised;
Figure 2 illustrates a view through cross-section A-A of Figure 1;
Figure 3 illustrates an example implementation of a matrix array for the keypad apparatus of Figure 1; and
Figure 4 illustrates the mapping of external inputs of the keypad apparatus to the keypad matrix of Figure 3 in accordance with one embodiment of the present invention.

### Description of Preferred Embodiment

The present invention is described herein with reference to a particular non-limiting example. The person skilled in the art will appreciate that the invention is more generally applicable. In particular the invention is described in relation to a mobile telephone handset. However, the invention may be more broadly applied to any keypad apparatus, and particularly to a housing in which a keypad is situated.

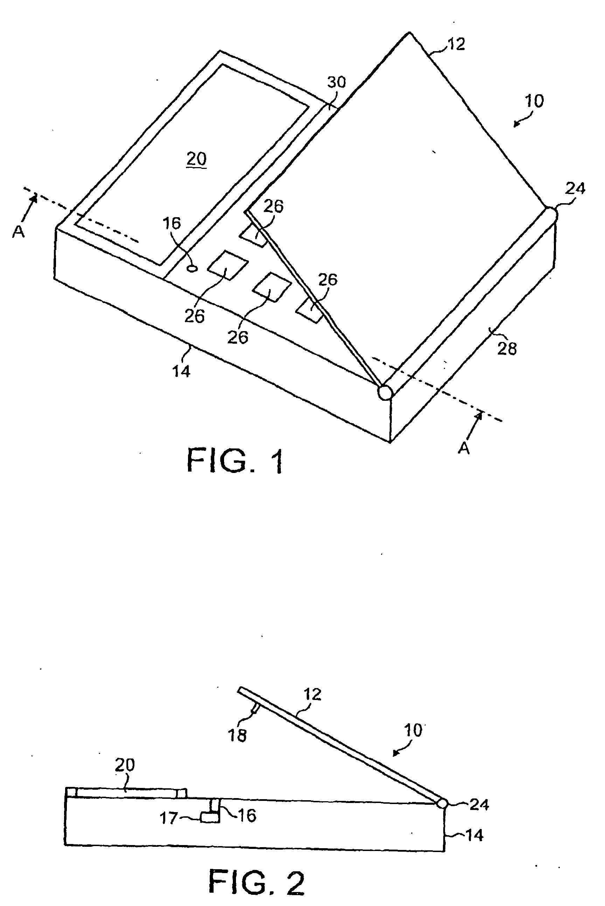

Referring to Figure 1, there is illustrated a mobile telephone handset in which the invention may be advantageously utilised. The mobile telephone handset includes a main housing 14 and a cover 12. The main housing includes a screen 20, and an area 30 within which is provided a plurality of keys 26 collectively forming a keypad. The cover 12 is attached to the housing 14 by means of a hinge 24 at the junction of a top surface of the housing 30 and a side surface of the housing 28. The cover is movable with respect to the housing by means of the hinge 24, such that in a closed position the cover rests on a portion of the housing. In an open position, the cover extends beyond the housing, such that in the illustrated embodiment the surface of the handset upon which the keypad is provided, 30, is uncovered. In moving from the closed to open position the cover moves through approximately 180 degrees. Such a structure is well-known in the art.

As can be seen from Figure 1, the keypad surface 30 may be further provided with an opening 16. Referring to Figure 2, which shows a cross-section through A-A of Figure 1, it can be seen that the opening 16 extends into the housing 14. From Figure 2 it can also be seen that the cover is provided with a protrusion 18 which extends from the surface thereof. The protrusion is shaped such that it engages the opening 16. Thus with the cover 12 closed, the protrusion 18 extends into the opening 16.

As shown in Figure 2, in the housing 14 there is provided a switch 17. The protrusion 18 is adapted such that with the cover closed, the protrusion engages the switch in order to switch its state. Thus if the switch is normally open, the protrusion 18 closes the switch on closing the cover. If the switch is normally closed the protrusion 18 opens the switch on closing the cover.

Thus the housing 14 is provided with engaging means for cooperatively engaging means on the cover 12, to thereby indicate the status of the cover.

In accordance with the present invention, the switch 17 comprises a switch of the keypad matrix array, and provides an input signal to the handset micro controller of the handset in a similar manner to the keys 26 of the keypad shown in Figure 1. This is further discussed herein with reference to Figure 1.

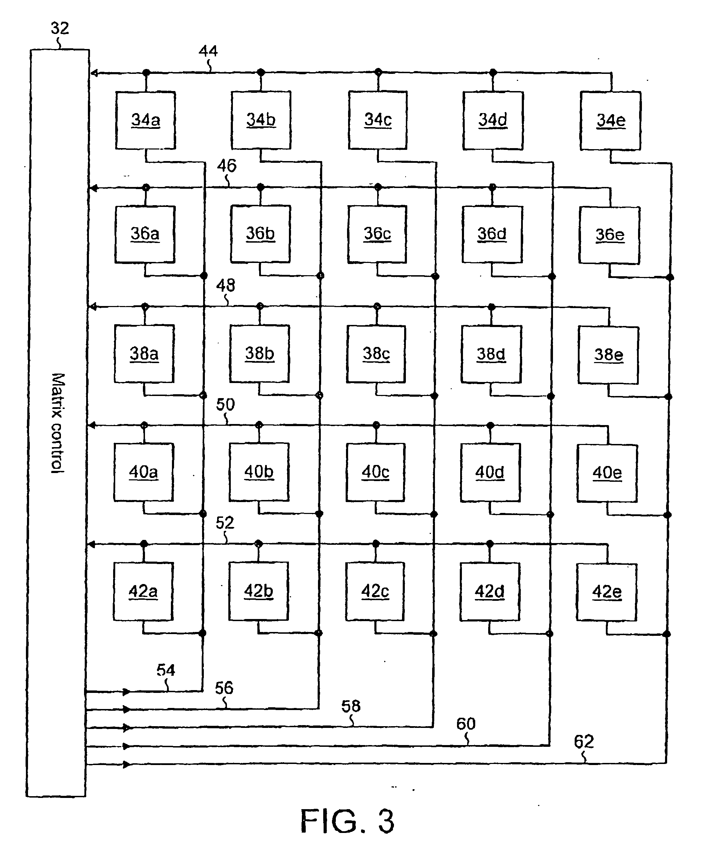

Referring to Figure 3, there is illustrated a matrix arrangement for processing inputs provided on the keys 26 of Figure 1. Such a matrix arrangement will be familiar to one skilled in the art, and only the necessary details are discussed herein to understand the present invention.

Figure 3 shows a 5x5 matrix, which allows for 25 keys to be connected thereto. The matrix comprises a set of 25 switches 34a to 42e. Each switch is associated with a key. Pressing a key activates the associated switch. The switches are arranged in five rows 34, 36, 38, 40, and 42. Each row has five columns a, b, c, d, and e. Each of the switches provides an input on a column line to a matrix control block 32, which in practice is the handset micro controller. The switches 34a to 34e provide an input to the matrix controller on line 44, the switches 36a to 36e provide an input to the matrix controller on line 46, the switches 38a to 38e provide an input to the matrix controller on line 48, the switches 40a to 40e provide an input to the matrix controller on line 50, and the switches 42a to 42e provide an input to the matrix controller on line 52. The matrix controller 32 generates an output to the switches in row a on line 54, to the switches in row b on line 56, to the switches in row c on line 58, to the switches in row d on line 60, and to the switches in row e on line 62.

As is known in the art, responsive to depression of a particular key of the keypad, the switch in the matrix of Figure 3 associated therewith is closed. For the purposes of an illustrative example, assume that the switch 38c is closed. Responsive thereto, a signal is generated on line 48 to the matrix control block 32. In order to determine which of the switches in the row 38 has generated such a signal, the matrix control sequentially applies a signal on column lines 54, 56, 58, 60, and 62 and at the same time continues to monitor row line 48. As the switch 38c is closed, the matrix control sees a change in the signal on line 48 when a signal is applied to line 58, and the matrix controller thereby identifies which switch has been closed.

The operation of the matrix of Figure 3 in this manner is well known to one skilled in the art.

In a typical application, the matrix has redundant switches. That is, the matrix has more switches than are needed in order to provide for the number of keys on the keypad of the handset. As such spare matrix switches are available. In a typical example there may be provided 22 keys on the keypad of the handset of Figure 1. As such, in the matrix arrangement of Figure 3 there are provided three redundant or spare switches in the matrix array of Figure 3. It should be noted that in view of the matrix structure of Figure 3 these switches are provided even though they are redundant.

In accordance with the preferred embodiment of the present invention, one of the unused switches of the matrix of Figure 3 is utilised as the switch 17 of Figure 2 for detecting the status of the cover 14. For example, if it is assumed that the switches 42c, 42d and 42e are unused, then the switch 42e is allocated for use as the switch 17 of Figure 2. When such switch is closed (or opened in dependence on the configuration of the switches) the closing of the cover 12 is detected directly by the matrix control block 32 using the conventional inputs and outputs of the matrix control block shown in Figure 3. Similarly the opening of the cover 12 from a closed position may be detected. Thus the micro-controller is not required to be provided with any additional input/output pins in order to detect that status of the cover 12.

From Figures 1 and 2 it can be seen that the flip-cover 12 covers the whole keypad, in practice this may not be the case. The flip-cover may cover only a selected number of keys, e.g. the volume keys may be uncovered. The flip cover may in fact cover none of the keys, since as discussed hereinabove in the background to the invention, the purpose of the flip cover is to reduce the overall size of the phone when not being used for a call. Indeed, there may be application where it is desirable for the flip cover not to cover any of the keys, for example when it is desirable for a user to enter numbers into memory or such like, which does not require setting up an active call. The location of the opening 16 will be positioned appropriately in order to ensure appropriate engagement with the flip cover on closing.

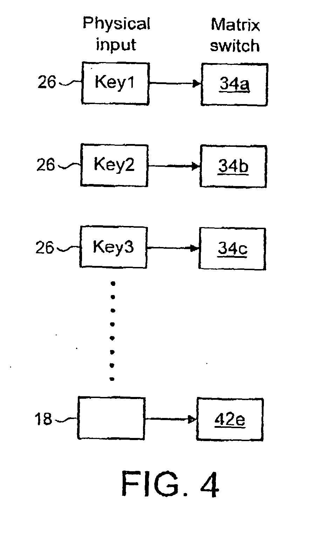

The principle of the present invention is further illustrated by Figure 4, where there is shown various ones of the keys 26 mapped to various ones of the matrix switches 34. In addition Figure 4 shows the 'protrusion or engaging means 18 mapped to the switch 42e of the matrix.

When the flip cover 12 is open, then the switch 42e is not engaged by the protrusion 18 and as such the switch 42e is an "unpressed key" from the perspective of the micro controller 32.

When the flip cover 12 is closed, then the switch 42e is engaged by the protrusion 18 and as such the switch 42e is a "pressed key" from the perspective of the micro controller 32.

As such the flip-switch, which indicates the status of the flip-cover, is incorporated as part of the keypad matrix. The 'open' status of the flip-cover is determined by a "key unpressed" state. The 'closed' status of the flip-cover is determined by a "key pressed" state. The "key pressed" state means that the row of the switch matrix is unusable. However, this does not matter if all the keys of that row are covered by the closed flip-cover, or if any of the other switches of the matrix associated with that row are unused.

The number, and identifications, of the keys covered on detection of closure of the flip-cover may be determined by the micro controller of the device in dependence upon the physical design of the device.

Although the invention has been described herein with reference to a mobile handset having a 'flip' cover, it is not so limited in its applicability. The invention may apply equally advantageously, for example, in a handset where the keypad is provided with a slide cover. The opening and closing of the slide cover may be detected in the same way. The invention broadly applies to any device having a keypad with a moveable cover.

It will be appreciated that the input to the matrix array of switches to determine the status of the cover may be implemented by alternative means. In an alternative implementation of the present invention the protrusion 18 on the flip cover may engage with an actual dedicated key 26 rather than the opening 16. In such an alternative implementation, there would need to be a spare key available on the keypad for such use.

The invention has been described herein with reference to particular preferred embodiments. One skilled in the art will appreciate the broader applicability of the present invention, the scope of which is limited only by the attached claims.

## Claims

1. A keypad apparatus comprising a keypad having a plurality of keys (26) and a cover (12) moveable between an open and a closed position, **characterised in that** the moveable cover includes engaging means (18) for cooperating with a switch (17) of a keypad matrix associated with the keypad, the status of the switch indicating the position of the cover, wherein with the cover in the closed position the status of the switch corresponds to a keypad key depression.

2. A keypad apparatus according to claim 1 wherein with the cover (12) in the closed position, at least one of the plurality of keys (26) is covered.

3. A keypad apparatus according to claim 2, wherein with the cover in the open position, the at least one of the plurality of keys is uncovered.

4. A keypad apparatus according to any one of claims 1 to 3, wherein with the cover (12) in the open position the status of the switch (17) corresponds to a keypad key being unpressed.

5. A keypad apparatus according to any preceding claim wherein the engaging means (18) comprises a switch actuator.

6. A keypad apparatus according to claim 5 wherein the switch actuator is a protrusion on the surface of the cover (12), which engages the switch when the cover is in the closed position.

7. A keypad apparatus according to any preceding claim wherein the switch (17) is recessed in a housing of the keypad.

8. A method for determining the status of a keypad apparatus comprising a keypad and a cover (12) moveable between an open and a closed position, **characterised in that** the moveable cover (12) includes engaging means (18) for cooperating with a switch (17) of a keypad matrix associated with the keypad, the method comprising determining the position of the cover (12) in dependence on the status of the switch (17), wherein with the cover in the closed position the status of the switch corresponds to a keypad key depression,

9. A method according to claim 8 further comprising covering at least one of the plurality of keys with the cover (12) in the dosed position.

10. A method according to claim 9 further comprising uncovering the at least one of the plurality of keys with the cover (12) in the open position.

11. A method according to any one of claims 8 to 10, wherein with the cover (12) in the open position the status of the switch (17) corresponds to a keypad key being unpressed.

12. A method according to any one of claims 8 to 11 wherein the engaging means (18) is a protrusion on the surface of the cover, the method comprising the step of the protrusion engaging the switch when the cover is in the closed position.

13. A method according to claim 12 wherein the switch (17) is recessed in a housing of the keypad.

## Patentansprüche

1. Tastatureinrichtung umfassend eine Tastatur aufweisend eine Mehrzahl von Tasten (26) und eine Abdeckung (12), die zwischen einer offenen und einer geschlossenen Position bewegbar ist, **dadurch gekennzeichnet, dass** die bewegbare Abdeckung Einschaltmittel (18) beinhaltet zum Zusammenwirken mit einem Schalter (17) einer Tastaturmatrix, die der Tastatur zugehörig ist, wobei der Status des Schalters die Position der Abdeckung anzeigt, wobei einher mit der Abdeckung in der geschlossenen Position der Status des Schalters einem Tasten-Niederdrücken der Tastatur entspricht.

2. Tastatureinrichtung nach Anspruch 1, wobei einher mit der Abdeckung (12) in der geschlossenen Position wenigstens eine der Mehrzahl von Tasten (26) bedeckt ist

3. Tastatureinrichtung nach Anspruch 2, wobei einher mit der Abdeckung in der offenen Position die wenigstens eine der Mehrzahl von Tasten unbedeckt ist.

4. Tastatureinrichtung nach einem der Ansprüche 1 bis 3, wobei einher mit der Abdeckung (12) in der offenen Position der Status des Schalters (17) einer Taste der Tastatur entspricht, die nicht gedrückt ist.

5. Tastatureinrichtung nach einem vorhergehenden Anspruch, wobei die Einschaltmittel (18) einen Schalter-Aktuator aufweisen.

6. Tastatureinrichtung nach Anspruch 5, wobei der Schalter-Aktuator ein Vorsprung auf der Oberfläche der Abdeckung (12) ist, welcher den Schalter schaltet, wenn die Abdeckung in der geschlossenen Position ist.

7. Tastatureinrichtung nach einem vorhergehenden Anspruch, wobei der Schalter (17) in einem Gehäuse der Tastatur vertieft ist.

8. Verfahren zur Bestimmung des Status einer Tastatureinrichtung umfassend eine Tastatur und eine Abdeckung (12), die zwischen einer offenen und einer geschlossenen Position bewegbar ist, **dadurch gekennzeichnet, dass** die bewegbare Abdeckung (12) Einschaltmittel (18) beinhaltet zum Zusammenwirken mit einem Schalter (17) einer Tastaturmatrix, die der Tastatur zugehörig ist, wobei das Verfahren die Bestimmung der Position der Abdeckung (12) in Abhängigkeit von dem Status des Schalters (17) umfasst, wobei einher mit der Abdeckung in der geschlossenen Position der Status des Schalters einem Tasten-Niederdrücken der Tastatur entspricht.

9. Verfahren nach Anspruch 8, weiterhin umfassend das Bedecken wenigstens einer der Mehrzahl von Tasten mit der Abdeckung (12) in der geschlossenen Position.

10. Verfahren nach Anspruch 9, weiterhin umfassend das Nichtbedecken der wenigstens einen der Mehrzahl von Tasten mit der Abdeckung (12) in der offenen Position.

11. Verfahren nach einem der Ansprüche 8 bis 10, wobei einher mit der Abdeckung (12) in der offenen Position der Status des Schalters (17) einer Taste der Tastatur entspricht, die nicht gedrückt ist.

12. Verfahren nach einem der Ansprüche 8 bis 11, wobei das Einschaltmittel (18) ein Vorsprung auf der Oberfläche der Abdeckung ist, das Verfahren umfassend den Schritt, dass der Vorsprung den Schalter schaltet, wenn die Abdeckung in der geschlossenen Position ist.

13. Verfahren nach Anspruch 12, wobei der Schalter (17) in einem Gehäuse der Tastatur vertieft ist.

## Revendications

1. Appareil à clavier comprenant un clavier comportant une pluralité de touches (26) et un couvercle (12) mobile entre une position ouverte et une position fermée, **caractérisé en ce que** le couvercle mobile comprend un moyen d'engagement (18) pour coopérer avec un interrupteur (17) d'une matrice de clavier associée au clavier, le statut de l'interrupteur indiquant la position du couvercle, dans lequel, lorsque le couvercle se trouve dans la position fermée, le statut de l'interrupteur correspond à un enfoncement des touches du clavier.

2. Appareil à clavier selon la revendication 1, dans lequel lorsque le couvercle (12) se trouve dans la position fermée, au moins une touche de la pluralité de touches (26) est recouverte.

3. Appareil à clavier selon la revendication 2, dans lequel lorsque le couvercle se trouve dans la position ouverte, ladite au moins une touche de la pluralité de touches est découverte.

4. Appareil à clavier selon l'une quelconque des revendications 1 à 3, dans lequel lorsque le couvercle (12) se trouve dans la position ouverte, le statut de l'interrupteur (17) correspond à un relâchement des touches du clavier.

5. Appareil à clavier selon l'une quelconque des revendications précédentes, dans lequel le moyen d'engagement (18) comprend un actionneur d'interrupteur.

6. Appareil à clavier selon la revendication 5, dans lequel l'actionneur d'interrupteur est une saillie sur la surface du couvercle (12) qui engage l'interrupteur lorsque le couvercle se trouve dans la position fermée.

7. Appareil à clavier selon l'une quelconque des revendications précédentes, dans lequel l'interrupteur (17) est placé en retrait dans un logement du clavier.

8. Procédé pour déterminer le statut d'un appareil à clavier comprenant un clavier et un couvercle (12) mobile entre une position ouverte et une position fermée, **caractérisé en ce que** le couvercle mobile comprend un moyen d'engagement (18) pour coopérer avec un interrupteur (17) d'une matrice de clavier associée au clavier, le procédé comprenant la détermination de la position du couvercle (12) en fonction du statut de l'interrupteur (17), dans lequel lorsque le couvercle se trouve dans la position fermée, le statut de l'interrupteur correspond à un enfoncement des touches du clavier.

9. Procédé selon la revendication 8, comprenant en outre le recouvrement d'au moins une touche de la pluralité de touches avec le couvercle (12) dans la position fermée.

10. Procédé selon la revendication 9, comprenant en outre le découvrement de ladite au moins une touche de la pluralité de touches avec le couvercle (12) dans la position ouverte.

11. Procédé selon l'une quelconque des revendications 8 à 10, dans lequel lorsque le couvercle (12) se trouve dans la position ouverte, le statut de l'interrupteur (17) correspond à un relâchement des touches du clavier.

12. Procédé selon l'une quelconque des revendications 8 à 11, dans lequel le moyen d'engagement (18) est une saillie sur la surface du couvercle, le procédé comprenant l'étape dans laquelle la saillie engage l'interrupteur lorsque le couvercle se trouve dans la position fermée.

13. Procédé selon la revendication 12, dans lequel l'interrupteur (17) est placé en retrait dans un logement du clavier.
